# EUROPÄISCHE PATENTANMELDUNG

(11) **EP 1 973 389 A2**
(43) Veröffentlichungstag der Anmeldung: **24.09.2008**
(21) Anmeldenummer: 08004676.6
(22) Anmeldetag: 13.03.2008
(51) Int. Cl.: H05B 41/38

(54) **Digitale Dimmereinrichtung für Energiesparlampen**

(30) Priorität: 22.03.2007 DE 202007004348 U
(71) Anmelder: Beck, Wilfried, 65191 Wiesbaden (DE)
(72) Erfinder: Beck, Wilfried, 65191 Wiesbaden (DE)
(74) Vertreter: Aue, Hans-Peter

(57) **Zusammenfassung**

Die Erfindung betrifft eine digitale Dimmereinrichtung (1) für Energiesparlampen (5) mit integrierter Steuerelektronik (7) zum Anschluss an eine durch Schalter (3) zu- und abschaltbare Energieversorgungsleitung (2) in einem Wechselstromnetz. Die digitale Dimmereinrichtung (1) besteht aus einem Taster (11), wobei der Tastereingang (12) und der Tasterausgang (13) mit einer Diode (14) derart verbunden sind, dass bei stromführender Energieversorgungsleitung (2) und bei geöffnetem Taster (11) nur ein Teilstrom des Wechselstroms der Energieversorgungsleitung (2) von der Diode (14) zur mit der Steuerelektronik (7) versehenen Energiesparlampe (5) fließt. Mit der digitalen Dimmereinrichtung (1) können auf einfache, technisch unkomplizierte und preiswerte Weise Energiesparlampen gedimmt werden.

## Beschreibung

Die Erfindung bezieht sich auf eine digitale Dimmereinrichtung für Energiesparlampen mit integrierter Steuerelektronik zum Anschluss an eine durch Schalter zu- und abschaltbare Energieversorgungsleitung in einem Wechselstromnetz.

Es existieren eine Vielzahl von Leuchtmitteln. Am häufigsten werden Glühlampen, Leuchtstofflampen, Halogenlampen, Energiesparlampen, LED-Lampen und dergleichen verwendet. Diese werden überwiegend in Wand-, Stand-und Deckenleuchten eingesetzt und werden in entsprechende Fassungen eingesteckt oder eingeschraubt, die wiederum in der Regel mit mehradrigen Stromkabeln mit einer Energieversorgungsleitung eines Wechselstromnetzes verbunden sind.

Die Leuchtmittel haben meist keinerlei Fernsteuerungsfunktion und dienen somit lediglich als Beleuchtungselemente, die über Schalter ein- und ausgeschaltet oder über Dimmer gedimmt werden können. Das Dimmen dient zur Erzeugung einer vom Anwender gewünschten stimmungsvollen Raumausleuchtung, um eine Wohlfühlatmosphäre zu schaffen. Um aber übliche Glühlampen oder Halogenlampen zu dimmen, sind teure und voluminöse Dimmer oder elektronische Vorschaltgeräte notwendig.

Aus der DE 20 2005 002 012 U1 ist ein digital gesteuertes Leuchtmittel bekannt, in das eine fernsteuerbare Steuerelektronik integriert ist. Hierbei ist die Steuerelektronik mittels eines Verfahrens zur Datenübertragung, einer Funkfernsteuerung oder eine Infrarotfernsteuerung steuerbar. Nachteilig hierbei ist, dass zwingend ein aufwändiges Daten- oder Funkübertragungssystem vorhanden sein muss. Dies ist für den Anwender meist zu kompliziert und kosten- und aufwandsintensiv zu installieren.

Des Weiteren ist es bekannt, dass sich die Standard-Energiesparlampe nicht ohne Weiteres dimmen lässt. Versuche mit einem Dimmerschalter, der bei eingeschaltetem Strom aufgedreht wird, haben gezeigt, dass dabei die Energiesparlampe bis zum Erreichen des vollen Helligkeitsgrades permanent flackert. D.h. man kann die Energiesparlampe nicht so dimmen wie eine normale Glühbirne. Sie wird nur stufenweise heller und flackert, wenn die volle Helligkeit nicht erreicht ist. Das Flackern macht aber das Licht unerträglich.

Um eine Energiesparlampe dimmen zu können, muss ein kompletter Dimmer in die Lampenfassung eingebaut werden. Eine solche dimmbare Lampe mit eingebautem, elektronisch kompliziertem Dimmer ist somit durch die eingebaute Steuerelektronik technisch sehr aufwändig und kostspielig und würde das Volumen der Energiesparlampe beträchtlich erhöhen.

Bekannt sind auch Energiesparlampen, bei denen durch eine integrierte 2-Stufen-Dimmfunktion durch einfaches Betätigen des Lichtschalters ein taghelles oder stimmungsvolles Licht ermöglicht wird. Dabei wird allerdings durch einfaches Aus- und Einschalten der Helligkeitseindruck auf die Hälfte reduziert. Mit diesen Energiesparlampen lässt sich jedoch kein beliebiger bzw. stufenloser Helligkeitsgrad der Energiesparlampe erreichen.

Andere Ergebnisse, Energiesparlampen zu dimmen, wurden nur durch eine aufwändige und teure Vorschaltelektronik erreicht, die für den normalen Gebrauch und insbesondere als Massenartikel eben aus diesen Gründen ungeeignet ist.

Es ist Aufgabe der Erfindung, eine digitale Dimmereinrichtung der eingangs genannten Art zu schaffen, mit welcher auf einfache, technisch unkomplizierte und preiswerte Weise Energiesparlampen gedimmt werden können.

Erfindungsgemäß wird die Aufgabe dadurch gelöst, dass die digitale Dimmereinrichtung aus einem Taster besteht, wobei der Tastereingang und der Tasterausgang mit einer Diode derart verbunden sind, dass bei stromführender Energieversorgungsleitung und bei geöffnetem Taster nur ein Teilstrom des Wechselstroms der Energieversorgungsleitung von der Diode zur mit der Steuerelektronik versehenen Energiesparlampe fließt.

Unter Energiesparlampen sollen im Sinne der Erfindung auch Leuchtdioden oder andere Energiesparsysteme für Leuchtmittel und unter Schalter sollen auch digitale Schalter mit Schaltelektronik, eine Fernbedienung, ein Mobiltelefon und dergleichen verstanden werden.

Ein Taster ist in der Elektrotechnik ein Bauteil, das bei Betätigung einen Stromkreis, je nach Beschaltung, schließt und/oder öffnet ohne, wie ein Schalter, einzurasten, d.h. nach dem Loslassen wird der betroffene Stromkreis wieder unterbrochen bzw. geschlossen. Darüber hinaus ist ein Taster eine preiswert zu erhaltender Massenartikel.

Anstelle eines üblicherweise verwendeten Schalters wird ein Taster verwendet, der im Ruhezustand den Stromkreis zur Energiesparlampe schließt und Strom durchlässt. Bei Betätigen des Tasters durch Drücken wird der Stromkreis unterbrochen und es kann kein Strom fließen. Damit allein kann kein Dimmen erreicht werden, denn immer wenn der Taster gedrückt wird, ist die Energiesparlampe ausgeschaltet.

Da die Energiesparlampe nicht viel Energie benötigt, wird der Taster mit einer Diode versehen, die mit dem Tastereingang und dem Tasterausgang verbunden ist.

Wird der Taster z.B. an einer Wand eines Gebäudes oder als Zwischenschalter in einem Gerätekabel oder einem Geräteschalter an der Lampe selbst durch einfaches kurzes Drücken betätigt, leuchtet die Energiesparlampe auf oder wird ausgeschaltet. Wird der Taster länger gedrückt, wird die Energiesparlampe gedimmt, d.h. die Lampe wird, vorzugsweise stufenlos, dunkler oder heller. Da die Steuerelektronik der Energiesparlampe die jeweilige Schaltfunktion gespeichert hat und kennt, kann sie entsprechend auf die Schalt- bzw. Steuerbefehle des Tasters reagieren. Wurde die Energiesparlampe zuvor eingeschaltet, wird deren Steuerelektronik beim nächsten kurzen Drücken des Tasters ausgeschaltet. Ebenso verhält es sich in Bezug auf die Dimmerfunktion. Wurde die Energiesparlampe zuvor auf eine bestimmte Helligkeitsstufe hochgedimmt, so wird die Steuerelektronik beim nächsten langen Drücken des Tasters die Energiesparlampe herunterdimmen und umgekehrt.

Das Gleiche kann erreicht werden durch einen zusätzlichen Schalter oder einen Mehrwegeschalter mit einer Schaltelektronik als zentralen Schalter, der zumindest ein zu bedienendes Betätigungselement mit einer Mehrzahl von Betätigungsflächen aufweist, wobei das Betätigungselement in mindestens drei Richtungen bewegt werden kann. Jede Betätigung des Betätigungselementes bewirkt mindestens einen Schaltvorgang für mindestens einen Verbraucher, z.B. der Energiesparlampe, und sämtliche Schaltvorgänge hierfür können durch lokale Betätigung des Betätigungselementes ausgelöst werden.

Somit können der Taster für die Energiesparlampe und der zusätzliche (zentrale) Schalter zum Ein- und Ausschalten und zum Dimmen der Energiesparlampe genutzt werden.

Bei herkömmlichen Dimmern, z.B. bei Vorschaltgeräten, bestimmen diese vordergründig die Wirkung der Schaltvorgänge "Ein", "Aus" und "Dimmen". Ein besonderer Vorteil der vorgeschlagenen digitalen Dimmereinrichtung besteht darin, dass der Anwender die Schaltvorgänge bestimmt, nämlich beispielsweise durch Wahl des Helligkeitsgrades, Wahl einer bestimmten Energiesparlampe, Wahl des Tasters und/oder Schalters usw..

Erfindungsgemäß fließt bei stromführender Energieversorgungsleitung und bei geöffnetem Taster nur ein Teilstrom des Wechselstroms der Energieversorgungsleitung von der Diode zur Energiesparlampe. Hingegen fließt bei stromführender Energieversorgungsleitung und bei geschlossenem Taster der volle Wechselstrom der Energieversorgungsleitung zur Energiesparlampe.

Der bei geöffnetem Taster fließende Teilstrom des Wechselstroms der Energieversorgungsleitung von der Diode zur Energiesparlampe entspricht weniger als der vollen Sinusleistung des Wechselstroms. Beispielsweise kann der Teilstrom etwa der halben Sinusleistung entsprechen. Die Diode lässt somit bei dem in einem Gebäudestromnetz herrschenden Wechselstrom im geöffneten Zustand des Tasters, also wenn der Stromkreis eigentlich unterbrochen wäre und kein Strom fließen würde, z.B. die eine Hälfte des Stromes durch, d.h. die halbe Welle, nämlich jeweils die obere (oder untere) Hälfte der Sinuskurve des Wechselstroms.

Dieser weniger als der vollen Welle der Sinuskurve entsprechende Teilstrom reicht aber aus, um die Energiesparlampe gleichmäßig gedimmt zu erleuchten. Dabei ist der Energiesparlampe im gedimmten Zustand nicht anzusehen, ob der Taster betätigt wird.

Mit einem einfachen preiswerten Bauteil, nämlich der Diode, wird der Taster versehen, der in der Lage ist, Energiesparlampen zu dimmen. Da ein Taster üblicherweise eingangs- und ausgangsseitig mehrere Anschlüsse aufweist, ist eine Diode leicht in den Taster zu integrieren, so dass mit dem Taster ein Digitalstromdimmer für Energiesparlampen realisiert wird.

Ein solcher Taster kann einzeln oder zusammen mit einer Energiesparlampe vertrieben werden und ist sofort in einem Gebäudestromnetz einsetzbar. Beim Einsatz vieler solcher Taster in Verbindung mit den Energiesparlampen kann ein Dimmen der gesamten Beleuchtung eines Gebäudes realisiert werden. Der Anwender ist also nicht mehr auf teure und technisch aufwändige Fertiglösungen, wie elektronische Vorschaltgeräte angewiesen, sondern kann selbst die Beleuchtung und Dimmung von Energiesparlampen bestimmen und vornehmen, ohne dass technische Kenntnisse der Elektrotechnik/Elektronik vorhanden sein müssen. Gegebenenfalls kann der Anwender sein Gebäude-Wechselstromnetz schrittweise zu einem Digitalstromnetz ausbauen und sich ein Hausgerätesteuerungssystem schaffen, wie es aus der WO 2005/124477 A2 bekannt ist.

Gemäß einer weiteren Ausgestaltung der erfindungsgemäßen digitalen Dimmereinrichtung sind die Schaltfunktionen "Ein", "Aus", "Heller", "Dunkler" für die Energiesparlampe durch einen mit einer Schaltelektronik versehenen Schalter in der Steuerelektronik der Energiesparlampe gespeichert und durch den mit der Diode versehenen Taster schaltbar. Dies kann der zuvor beschriebene Mehrwegeschalter oder aber auch ein anderer Schalter sein, der seine Schalt- und Speicherbefehle über den Digitalstrom des Wechselspannungsnetzes an die Steuerelektronik der Energiesparlampe überträgt. Zweckmäßigerweise ist die Steuerelektronik der Energiesparlampe vorzugsweise ein Mikrochip mit Speicherfunktion.

Des Weiteren ist vorgesehen, dass die Steuerelektronik der Energiesparlampe mittels der Schaltelektronik des Schalters der Energieversorgungsleitung programmierbar ist.

Die Steuerelektronik der Energiesparlampe kann somit nicht nur die Schaltfunktionen "An", "Aus", "Heller" und "Dunkler" realisieren, sondern kann auch programmiert werden. Beispielsweise wird die Energiesparlampe durch die Dimmfunktion auf eine bestimmte, vom Anwender gewünschte Helligkeit eingestellt, indem der Taster z.B. durch ein- oder mehrfaches Drücken "kurz/lang" betätigt wird. Dabei erfolgt die Einstellung des Helligkeitsgrades der Energiesparlampe durch langes Drücken des Tasters. Dann wird der Taster "lang/kurz" gedrückt. Die Steuerelektronik der Energiesparlampe speichert daraufhin den vom Anwender gewählten Helligkeitsgrad. Wird dann die Energiesparlampe angeschaltet, leuchtet diese nicht mit maximaler Helligkeit, sondern in dem zuvor eingestellten, geringeren Helligkeitsgrad.

Darüber hinaus kann ein frei wählbarer Helligkeitsgrad der Energiesparlampe mittels der Schaltelektronik des Schalters der Energieversorgungsleitung in der Steuerelektronik der Energiesparlampe gespeichert werden. Dieser Helligkeitsgrad wird dann bei Betätigung des Tasters automatisch eingestellt.

Der Auswahl der Stärke der Diode, die am Taster verwendet wird, kann eine besondere Bedeutung zukommen. So kann von der Stärke der Diode die Anzahl der durch den Taster steuerbaren Energiesparlampen abhängig sein, wobei je stärker die Diode ist, umso mehr Energiesparlampen damit steuerbar sind. Auf diese Weise können durch den Taster mehrere Energiesparlampen angesteuert werden.

Bei einer anderen Ausgestaltung der erfindungsgemäßen digitalen Dimmereinrichtung weist diese einen zusätzlichen Taster zum Schalten einer Lampe ohne Steuerelektronik auf, der vor dem ersten Taster in die Energieversorgungsleitung eingesetzt ist.

Wird eine normale Glühlampe oder eine normale Energiesparlampe ohne Steuerelektronik verwendet, kann die digitale Dimmereinrichtung mit dem mit der Diode versehenen Taster die Lampe nicht mehr ausschalten, denn beim Drücken des Tasters würde nur die halbe Helligkeit und beim Loslassen des Tasters wieder die volle Helligkeit der Lampe erreicht. Um dies zu vermeiden, ist ein zweiter Taster vorgesehen, der in einer Richtung nicht tastet, sondern rastet. Durch die Rastposition des zweiten Tasters wird der Strom vollständig unterbrochen und die Lampe wird ausgeschaltet. In der Mechanik des Tasters kann dafür ein Schiebeelement vorgesehen sein, welches verhindert, dass der zweite Taster ausgerastet und somit die Lampe ausgeschaltet werden kann. Dies kann beispielsweise in Hotels oder öffentlichen Einrichtungen von Interesse sein, um im Alarmfall, beispielsweise eines Brandes, ein Leuchten der Glühlampen zu ermöglichen.

Schließlich kann vorgesehen werden, dass mehrere Schalter zur Auslösung von Schaltvorgängen für die Energiesparlampe in Reihe geschaltet sind. Dadurch ist eine Steuerung der Schaltfunktionen der Energiesparlampe durch jeden der Schalter möglich. Die Schalter können an verschiedenen Orten des Raumes oder sogar außerhalb eines Raumes eines Gebäudes, d.h. abseits vom Standort der Energiesparlampe, angeordnet sein, von wo aus die Energiesparlampe gesteuert und geschaltet wird.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand von Ausführungsbeispielen, die in den Zeichnungen dargestellt sind, näher beschrieben. Es zeigen:
- Fig. 1: eine erfindungsgemäße digitale Dimmereinrichtung für Energiesparlampen mit einer Diode, die extern am Taster vorgesehen ist,
- Fig. 2: eine digitale Dimmereinrichtung gemäß Fig. 1 mit einer Diode, die intern am Taster vorgesehen ist, und
- Fig. 3: eine digitale Dimmereinrichtung gemäß Fig. 1 mit einem zweiten Taster.

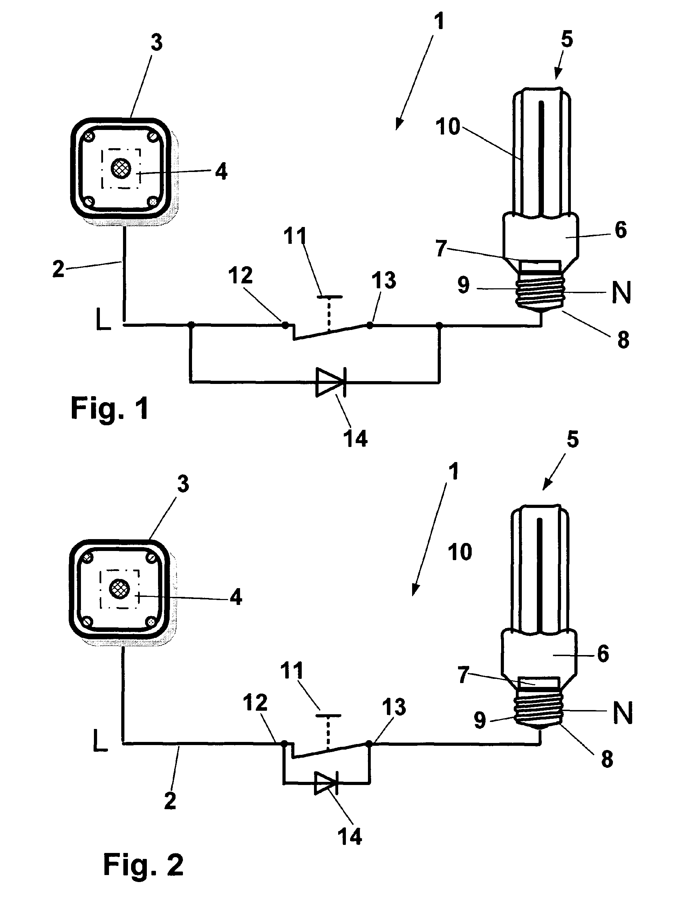

Die digitale Dimmereinrichtung 1 gemäß den Fig. 1 bis 3 ist über eine Energieversorgungsleitung 2 eines Wechselstromnetzes in einem Gebäude beispielhaft mit einem Mehrwegeschalter 3 mit einer integrierten Schaltelektronik 4 verbunden. Der Mehrwegeschalter 3 ist an einer Wand eines Raumes angebracht und direkt oder per Infrarot/Bussystem oder per Funk an das Wechselstromnetz angeschlossen. Der Mehrwegeschalter 3 kann über das Wechselstromnetz des Gebäudes auch mit anderen Verbrauchern, einer oder mehreren Gruppen von Verbrauchern verbunden sein.

Die digitale Dimmereinrichtung 1 ist zum Steuern und Schalten einer Energiesparlampe 5 vorgesehen, in deren Sockel 6 eine Steuerelektronik 7 in Form eines Mikrochips eingesetzt ist. Der Fuß 8 der Energiesparlampe 5, der den Nullleiter N der Energieversorgungsleitung 2 bildet, weist ein Einschraubgewinde 9 auf, mit dem die Energiesparlampe 5 in eine nicht gezeigte Lampenfassung einer Leuchte eingeschraubt wird. Oberhalb des Sockels 6 ist der Glaskörper 10 der Energiesparlampe 5 angeordnet.

In die Energieversorgungsleitung 2, die als Leiter L im Wechselstromnetz dient, ist ein durch Symbol dargestellter Taster 11 zwischengeschaltet. Der Tastereingang 12 und der Tasterausgang 13 sind mit einer durch Symbol gekennzeichneten Diode 14 derart verbunden, dass bei stromführender Energieversorgungsleitung 2 und bei geöffnetem Taster 11 nur ein Teilstrom des Wechselstroms der Energieversorgungsleitung 2 von der Diode 14 zur Energiesparlampe 5 fließt.

Gemäß Fig. 1 ist die Diode 14 extern, also außen bzw. außerhalb am Taster 11 angebracht. Die Diode 14 kann dabei von einem an sich bekannten, nicht gezeigten Schrumpfschlauch umgeben und geschützt sein.

Bei der Ausführungsform der digitalen Dimmereinrichtung 1 gemäß Fig. 2 ist die Diode 14 intern, d.h. integriert in den Taster 11 eingebaut.

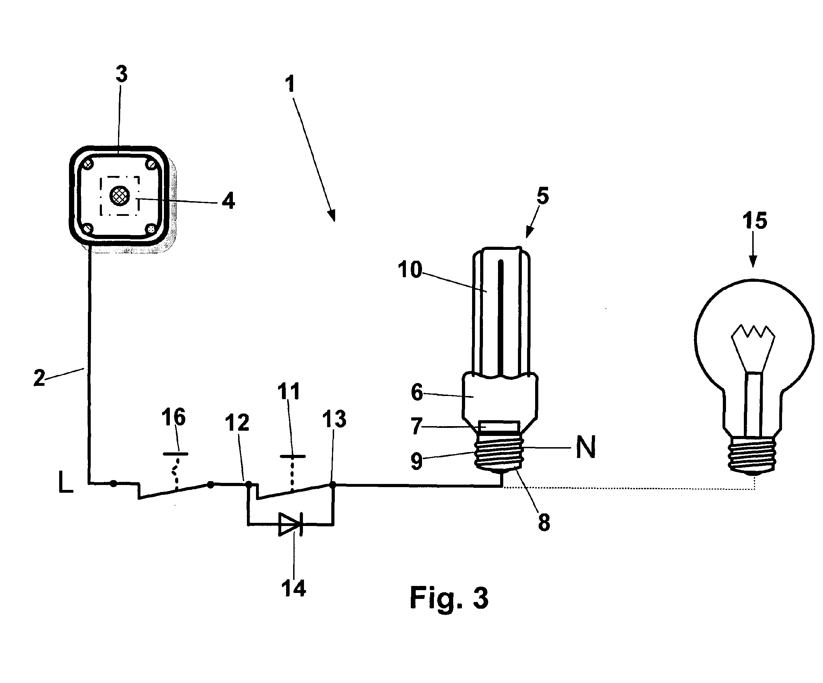

Fig. 3 zeigt die digitale Dimmereinrichtung 1, mit der neben der Energiesparlampe 5 auch eine normale Glühlampe 15 oder eine normale Energiesparlampe ohne eigene Steuerelektronik ein- und ausgeschaltet werden kann. Ein zweiter Taster 16 ist derart ausgebildet, dass dieser in einer Richtung nicht tastet, sondern rastet. Durch die Rastposition des zweiten Tasters 16 wird der Strom vollständig unterbrochen und die Lampe kann ausgeschaltet werden. Der zweite Taster 16 ist zwischen dem Mehrwegeschalter 3 und dem Taster 11 in die Energieversorgungsleitung 2 des Wechselstromnetzes geschaltet.

### Liste der Bezugszeichen

- 1: Digitale Dimmereinrichtung
- 2: Energieversorgungsleitung
- 3: Mehrwegeschalter
- 4: Schaltelektronik
- 5: Energiesparlampe
- 6: Sockel
- 7: Steuerelektronik
- 8: Fuß
- 9: Einschraubgewinde
- 10: Glaskörper
- 11: Taster
- 12: Tastereingang
- 13: Tasterausgang
- 14: Diode
- 15: Glühlampe
- 16: Taster
- N: Nullleiter
- L: Leiter

## Patentansprüche

1. Digitale Dimmereinrichtung (1) für Energiesparlampen (5) mit integrierter Steuerelektronik (7) zum Anschluss an eine durch Schalter (3) zu- und abschaltbare Energieversorgungsleitung (2) in einem Wechselstromnetz, **dadurch gekennzeichnet, dass** die digitale Dimmereinrichtung (1) aus einem Taster (11) besteht, wobei der Tastereingang (12) und der Tasterausgang (13) mit einer Diode (14) derart verbunden sind, dass bei stromführender Energieversorgungsleitung (2) und bei geöffnetem Taster (11) nur ein Teilstrom des Wechselstroms der Energieversorgungsleitung (2) von der Diode (14) zur mit der Steuerelektronik (7) versehenen Energiesparlampe (5) fließt.

2. Digitale Dimmereinrichtung nach Anspruch 1, **dadurch gekennzeichnet, dass** bei stromführender Energieversorgungsleitung (2) und bei geschlossenem Taster (11) der volle Wechselstrom der Energieversorgungsleitung (2) zur Energiesparlampe (5) fließt.

3. Digitale Dimmereinrichtung nach Anspruch 1 oder 2, **dadurch gekennzeichnet, dass** der bei geöffnetem Taster (11) fließende Teilstrom des Wechselstroms der Energieversorgungsleitung (2) von der Diode (14) zur Energiesparlampe (5) weniger als der vollen Sinusleistung des Wechselstroms entspricht.

4. Digitale Dimmereinrichtung nach einem der Ansprüche 1 bis 3, **dadurch gekennzeichnet, dass** die Schaltfunktionen "Ein", "Aus", "Heller", "Dunkler" für die Energiesparlampe (5) durch einen mit einer Schaltelektronik (4) versehenen Schalter (3) in der Steuerelektronik (7) der Energiesparlampe (5) gespeichert und durch den mit der Diode (14) versehenen Taster (11) schaltbar sind.

5. Digitale Dimmereinrichtung nach einem der Ansprüche 1 bis 4, **dadurch gekennzeichnet, dass** die Steuerelektronik (7) der Energiesparlampe (5) mittels der Schaltelektronik (4) des Schalters (3) der Energieversorgungsleitung (2) programmierbar ist.

6. Digitale Dimmereinrichtung nach einem der Ansprüche 1 bis 5, **dadurch gekennzeichnet, dass** ein frei wählbarer Helligkeitsgrad der Energiesparlampe (5) mittels der Schaltelektronik (4) des Schalters (3) der Energieversorgungsleitung (2) in der Steuerelektronik (7) der Energiesparlampe (5) speicherbar ist.

7. Digitale Dimmereinrichtung nach einem der Ansprüche 1 bis 6, **dadurch gekennzeichnet, dass** von der Stärke der Diode (14) die Anzahl der durch den Taster (11) steuerbaren Energiesparlampen (5) abhängig ist, wobei je stärker die Diode (14) ist, umso mehr Energiesparlampen (5) damit steuerbar sind.

8. Digitale Dimmereinrichtung nach einem der Ansprüche 1 bis 7, **dadurch gekennzeichnet, dass** die Steuerelektronik (4) der Energiesparlampe (5) vorzugsweise ein Mikrochip ist.

9. Digitale Dimmereinrichtung nach einem der Ansprüche 1 bis 8, **dadurch gekennzeichnet, dass** diese einen zusätzlichen Taster (16) zum Schalten einer Lampe (15) ohne Steuerelektronik aufweist, der vor dem ersten Taster (11) in die Energieversorgungsleitung (2) eingesetzt ist.

10. Digitale Dimmereinrichtung nach einem der Ansprüche 1 bis 9, **dadurch gekennzeichnet, dass** mehrere Schalter (3) zur Auslösung von Schaltvorgängen für die Energiesparlampe (5) in Reihe geschaltet sind.
